# EUROPEAN PATENT APPLICATION

(11) **EP 2 166 156 A1**
(43) Date of publication of application: **24.03.2010**
(21) Application number: 09170998.0
(22) Date of filing: 22.09.2009
(51) Int. Cl.: E01H 1/12

(54) **Environmental friendly portable device for collecting animal faeces**

(30) Priority: 22.09.2008 IT RM20080501
(71) Applicant: Procopio, Fernando, 88100 Catanzaro (IT)
(72) Inventor: Procopio, Fernando, 88100 Catanzaro (IT)
(74) Representative: Santi, Filippo

(57) **Abstract**

The present invention concerns a portable device for collecting animal faeces comprising a rod (1) and a shovel (2), said shovel being formed by a folded pre-cut shaped sheet and being coupled with said rod (1) through movable coupling means.

## Description

The present invention concerns an environmental friendly portable device for collecting animal faeces.

At present, the cleaning of public gardens, sidewalks and pedestrian areas from faeces of pets taken out for a walk, dogs in particular, is a really felt problem, especially in urban areas.

The solution of this problem is provided by urban cleaning companies, which started to be be supplied with specific vacuum cleaning devices or other devices for large scale cleaning.

However, the individual care of each pet owner is much more efficient and accurate, or at least of people taking care of cleaning the public soil from wastes that their pets inevitably produce.

Unfortunately, the pet owners that, provided with a shovel, regularly carry out this job not only of civility, but also made compulsory according to the law, are very few. Perhaps this very little sensitivity of pet owners is also due to the fact that products presently available on the market do not optimally accomplish their task.

In fact, the classic plastic shovel with sack, is not only voluminous and annoying to be carried, but also make the operations of taking and storing animal faeces unpleasant, since the shovel inevitably get dirty. This fact forces pet owners to the unpleasant task of taking back home a dirty and unhygienic shovel.

Disposable shovels made of biodegradable materials were also realised, but they present drawbacks due to their size and impracticability of use, since they force the user to bend for collecting.

It is therefore evident the utility of realising a device for collecting animal faeces solving at the same time the problems of ecocompatibility, hygienic safety and ease of use.

In this context is presented the solution according to the present invention, with the aim of providing a portable device for collecting animal faeces composed of a disposable shovel assuring hygienic safety of the device, realised with environmental friendly material and a rod that, coupling with the shovel, assures its ease of use.

The purpose of the present invention is therefore that of realising an environmental friendly portable device for collecting animal faeces allowing to overcome the limits of the solutions according to the prior art and to obtain the previously described technical results. Further aim of the invention is that said device can be realised with substantially low costs, both production costs and management costs.

Not last purpose of the invention is that of realising a device that is substantially simple, safe and reliable.

It is therefore a specific object of the present invention a portable device for collecting animal faeces comprising a rod and a shovel, said shovel being formed by a folded pre-cut shaped sheet and being coupled to said rod by means of movable coupling means.

Preferably, according to the invention, said rod is a telescopic rod. Further, according to the invention, said movable coupling means of said rod and said shovel comprise a connecting element that can be movably coupled with said rod.

Preferably, according to the invention, the coupling of said connecting element and said rod is obtained by a locking mechanism comprising a release button.

Finally, always according to the present invention, said shovel, formed by a folded pre-cut shaped sheet, is realised flat and is folded for use.

The solution according to the invention is particularly advantageous because it consists in a product composed of components having reduced dimensions, in particular as far as the shovel is concerned, that can be packaged in a completely flat form, particularly useful for being transported, and that is easy to mount in order to give it a tridimensional structure of container, pratical to be used, resistent and that can be completely realised with paper material, completely biodegradable.

The present invention will be described, for illustrative, non limitative purposes, according to one of its preferred embodiments, with reference in particular to the figures of the enclosed drawings, wherein:
- Figure 1 shows a perspective view of a portable device for collecting animal faeces according to the present invention,
- Figure 2 shows a perspective view of the components of the portable device for collecting animal faeces of Figure 1,
- Figure 3 shows a skematic view of the components of the portable device for collecting animal faeces of Figure 1, in particular of the mechanism for reciprocal coupling, and
- Figure 4 shows a plan vied of the shovel of the portable device for collecting animal faeces of Figure 1, in flat position for selling and transportation before use.

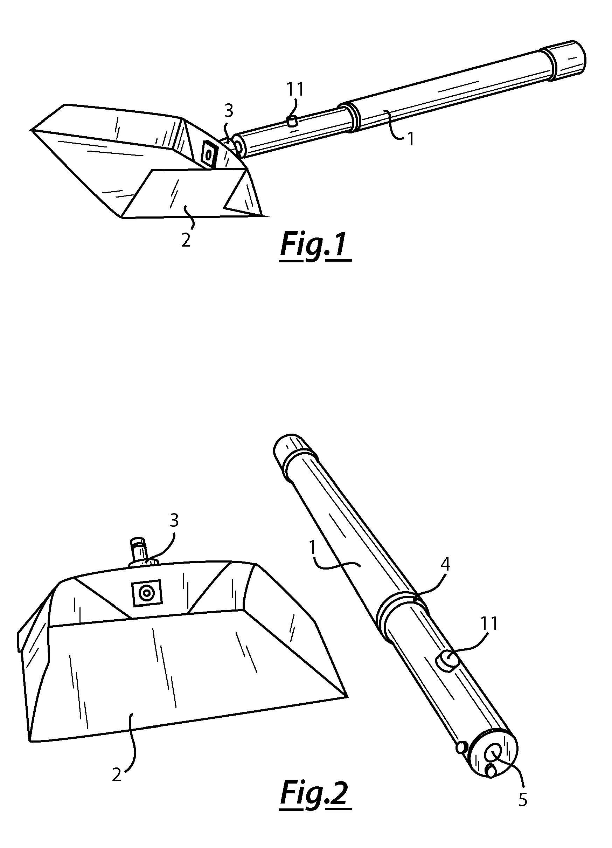

Making particolar reference to Figures 1 and 2, the portable device for collecting animal faeces of the present invention is constituted by a rod 1 and a shovel 2, coupled to each other by means of a connecting element 3.

In particular, the rod 1 is a telescopic rod and can be realised with metal or plastics or other suitable material and is divided in a plurality of sections that can glide with respect to one another and that they can slide one inside the other and can be fixed in the desired position by means of locking rings 4 already known. In this way it is possible to use the portable device for collecting animal faeces according to the invention without any need to bend down to the ground, simply by extending the telescopic rod 1 till the desired length. At the same time, after use, it will be also possible to close the telescopic rod 1 so that it can be easily transported, for example within a handbag.

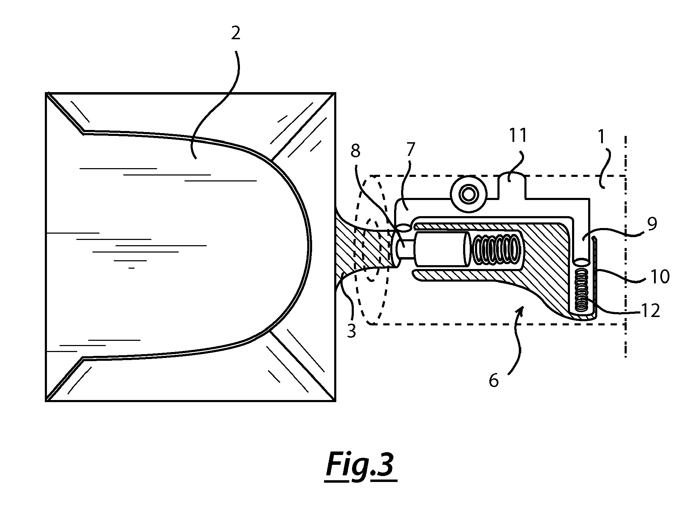

As far as the body of said connecting element 3 is concerned, it comprises a first part for coupling with said shovel 2 and a second part for movable coupling with said rod 1. According to the preferred embodiment shown with reference to the figures, in particular with reference to Figure 3, the part for movable coupling with said rod 1 of said connecting element 3 can be inserted in a seat 5 of said rod 1, and locked in its position by means of a simple locking mechanism 6, comprising a tooth 7 entering in a groove 8 of said part of the connecting element 3 and a further part 9 being fixed in a suitable seat 10 of the locking mechanism 6, provided with coupling means, not shown. The locking mechanism 6 further comprises a release button 11, acting on which part 9 is released by said coupling means and pushed by a spring 12, housed in seat 10, in order to put the tooth 7 away from the groove 8 of the connecting element 3, which, thanks to another spring 13, housed in the seat 5, is expelled from the seat 5 itself.

By means of the release button 11 of the locking mechanism 6 it is therefore possible to release the connecting element 3 together with the shovel 2 without any need for touching any of these two components of the device. It is particularly useful after use, when the shovel 2 is dirty and can in this way be withdrawn in an animal faeces collecting container or closed in a collecting bag, which will be put into a rubbish skip for collecting spaces.

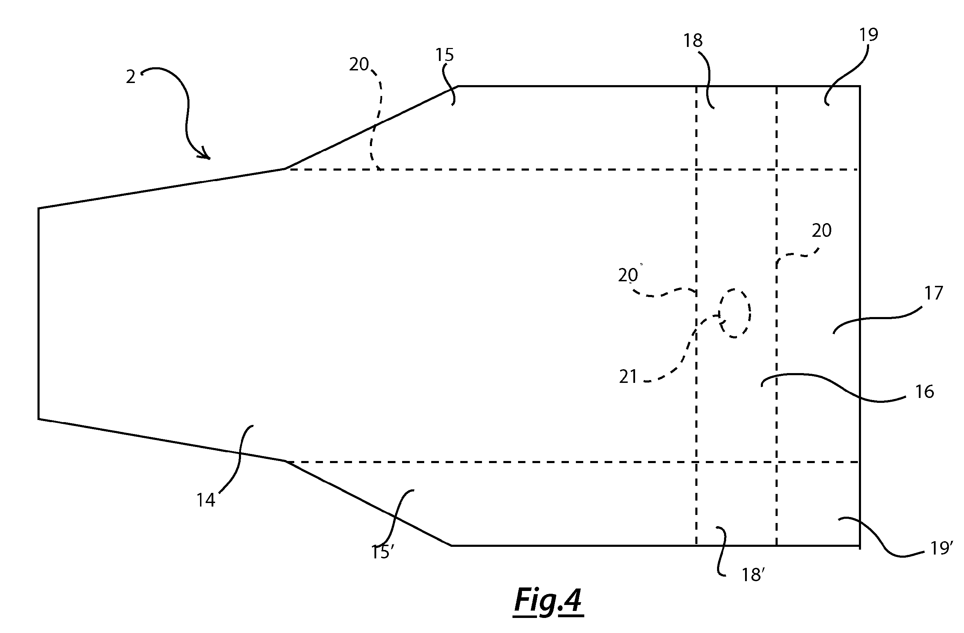

Finally, the shovel 2 is constituted by a folded pre-cut shaped sheet that, in an open position, appears as shown in Figure 4, that is a folded precut shaped sheet 13, provided with a central surface 14, coming from lateral surfaces 15, 15', laterally adjacent to the central surface 14, a first rear surface 16, adjacent to the central surface 14 and a second rear surface 17, adjacent to said first rear surface 16. Further, said lateral surfaces 15, 15' and said first rear surface 16 are connected by means of fins 18, 18', and said second rear surface 17 and said fins 18, 18' are connected by means of the fins 19, 19'. All of said surfaces are respectively adjacent in correspondence of folding lines 20. La first rear surface 16 is provided with an opening 21 for coupling with connecting element 3. The fins 18, 18', 19, 19' are covered with adhesive material. Thus the shovel 2 can be easily folded to take a suitable form for its use by bending along the folding lines 20 firstly the lateral surfaces 15, 15', then the first rear surface 16, by forcing the fins 18, 18' to adhere to the lateral surfaces 15, 15'. Then the second rear surface 17 is folded, taking care that the fins 19, 19' adhere correctly. Now the shovel 2 is formed and is ready for coupling with the connecting element 3.

The shovel 2 can be made of paperboard or other environmental friendly material.

In the rear part adhesive strips can be present in order to assure the needed rigidity and the possibility to make the connecting element 3 adhere.

Anyway, the shape can be different as a function of the specific use for which the portable device for collecting animal faeces according to the invention is intended. In particular, it is possible to provide for longer shapes to be used on rambling surfaces, in order to allow an easier use in narrow passages.

Dimensions also of the shovel can vary in order to allow for different loads. The device can be completed by a bag made of an environmental friendly material, preferably in hard paper with locking strip and by a further paper having the function of a broom, in order to make the step of collecting easier. Also this further sheet is realised in environmental friendly material and preferably in resistant paper and can be easily disposed after use.

It is evident the comfort of the portable device for collecting animal faeces according to the present invention, which, thanks to the production in pre cut shaped sheet of the shovel and to the telescopic rod allows for the packaging and transport with minimal space needed and thanks to the fact that the shovel can be movably coupled to the rod and is realised in biocompatible material, it allows for a comfortable release of the shovel after use. The present invention has been described for illustrative, non limitative purposes, according to its preferred embodiments, but it must be understood that any variation and/or modification can be made by the persons skilled in the art without escaping from the relative protection, as defined by the enclosed.

## Claims

1. Portable device for collecting animal faeces **characterised in that** it comprises a rod (1) and a shovel (2), said shovel being formed by a folded pre-cut shaped sheet and being coupled with said rod (1) through movable coupling means.

2. Portable device for collecting animal faeces according to claim 1, **characterised in that** said rod (1) is a telescopic rod.

3. Portable device for collecting animal faeces according to claim 1 or 2, **characterised in that** said movable coupling means of said rod (1) and said shovel (2) comprise a connecting element (4) that can be movably coupled with said rod (1).

4. Portable device for collecting animal faeces according to any of the previous claims, **characterised in that** the coupling of said connecting element (4) and said rod (1) is obtained by a locking mechanism (6) comprising a release button (11).

5. Portable device for collecting animal faeces according to any of the previous claims, **characterised in that** said shovel (2), formed by a folded pre-cut shaped sheet, is realised flat and is folded for use.
